# EUROPEAN PATENT APPLICATION

(11) **EP 4 394 672 A1**
(43) Date of publication of application: **03.07.2024**
(21) Application number: 23220600.3
(22) Date of filing: 28.12.2023
(51) Int. Cl.: G06Q 10/0639, G06Q 10/0637, G06Q 10/0631, H04M 3/51

(54) **AGENT ENGAGEMENT ANALYZER**

(30) Priority: 29.12.2022 US 202218147754
(71) Applicant: Calabrio, Inc., Minneapolis, MN 55446 (US)
(72) Inventor: MACIEJ, Michael, Minneapolis, MN 55405 (US); ISHAM, Nathan, Minneapolis, MN 55405 (US)
(74) Representative: Marks & Clerk LLP

(57) **Abstract**

The disclosure relates to analyzing historical data and generating predictive engagement associated with an agent at workplace. The disclosed technology is directed to improving predictive engagement of the agent by generating a task schedule based on predictive engagement data and score associated with the agent. In particular, an agent engagement server generates historical engagement data and score based on activity data of the agent. The historical engagement data include analytics of task performances associated with the agent. The agent engagement server further generates predictive engagement data and score based on the historical engagement data using a predictive engagement model that predicts a level of engagement by the agent in performing tasks. The disclosure generates a schedule for performing one or more tasks based on the predictive engagement data.

## Description

### BACKGROUND

Managing performance of contact center agents executing tasks related to handling contacts from customers is complex. Productivity and quality of performing the tasks depend on how the contact center agents engage and interact with various types of customers with varying sentiments on topics that vary. Some contacts may take longer than other contacts. Organizations often record activities of contact center agents and subsequently assess performance for improving productivity and quality of customer services to customers. Performances typically are based on whether the agents deliver exceptional customer service by meeting and exceeding individual key performance indices.

It is with respect to these and other general considerations that the aspects disclosed herein have been made. Although relatively specific problems may be discussed, it should be understood that the examples should not be limited to solving the specific problems identified in the background or elsewhere in this disclosure.

### SUMMARY

Aspects of the present disclosure relate to assessing and predicting a performance of agents who interact with customers (e.g., contacts) at a workplace. The disclosed technology is directed to determining data and scores representing work engagement of an agent. The disclosed technology is further directed to generating schedules for performing tasks based on predictive engagement data and scores.

The term "agent engagement" refers to an agent engaging in one or more tasks at a workplace, including taking a contact received from contacts at a customer support center. Aspects of the agent engagement includes reliability and contact handling. Reliability and contact handling further includes a plurality of categories that collectively characterizes the agent engagement.

The disclosed technology collects and stores activity data based on an agent performing tasks at workplace. An agent engagement server generates historical engagement data and score associated with the agent based on the activity data. The historical engagement score is based on an aggregate of weighted values associated with respective categories of the plurality of categories of the agent engagement. The agent engagement server further generates predictive engagement data and scores based on the historical engagement data using a predictive engagement model. The predictive engagement model includes a trained machine learning model that predicts values associated with various categories of the plurality of the agent engagement based on the historical engagement data. Data for training and/or fine-tuning the predictive engagement model includes a pair of grand-truth expectation data of an agent and example historical engagement data.

The disclosed technology further provides the predictive engagement data and scores for evaluating the agent. A schedule generator uses the predictive engagement data to generate a schedule for tasks to be performed by the agent. The schedule reflects the predictive engagement data of the agent by accommodating positive values of the predictive engagement data based on adjusting time, duration, and other aspects of tasks. An execution of the scheduled task is recorded as activity data for further analysis of performance.

This Summary introduces a selection of concepts in a simplified form, which is further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the following description and, in part, will be apparent from the description, or may be learned by practice of the disclosure.

### BRIEF DESCRIPTIONS OF THE DRAWINGS

Non-limiting and non-exhaustive examples are described with reference to the following figures.
FIG. 1 illustrates an overview of an exemplary system for generating historical and predictive engagement data associated with contact service agents in accordance with aspects of the present disclosure.
FIG. 2 illustrates an example system with data structures associated with historical and predictive engagement data and predictive model in accordance with aspects of the present disclosure.
FIG. 3 illustrates example data in accordance with aspects of the present disclosure.
FIG. 4 illustrates example data associated with generating historical and predictive engagement data and schedules in accordance with aspects of the present disclosure.
FIG. 5 illustrates an example method for generating historical and predictive engagement data in accordance with aspects of the present disclosure.
FIG. 6 illustrates an example method for training a predictive model in accordance with aspects of the present disclosure.
FIG. 7 illustrates a simplified block diagram of a device with which aspects of the present disclosure may be practiced in accordance with aspects of the present disclosure.

### DETAILED DESCRIPTION

Various aspects of the disclosure are described more fully below with reference to the accompanying drawings, which from a part hereof, and which show specific example aspects. However, different aspects of the disclosure may be implemented in many different ways and should not be construed as limited to the aspects set forth herein; rather, these aspects are provided so that this disclosure will be thorough and complete, and will fully convey the scope of the aspects to those skilled in the art. Practicing aspects may be as methods, systems, or devices. Accordingly, aspects may take the form of a hardware implementation, an entirely software implementation or an implementation combining software and hardware aspects. The following detailed description is, therefore, not to be taken in a limiting sense.

Workforce engagement management (WEM) is an approach for managing tasks and the performance of customer service agents engaging in support tasks. Customer service agents perform customer services through interactive communications with customers at workplaces (e.g., contact centers) by using telephones, video contacts, and the like.

The present disclosure defines agent engagement, which involves at least the following aspects:

First is the voice of the employee. A new emphasis in evaluating contact center workforce treatment is the "voice of the employee." The voice of employee demonstrates that, to retain a talented workforce and get the best from them, they have to be listened to. Whether it is in looking at an employee's professional development or respecting their lifestyle requirements, management needs to offer room to speak, not a closed door.

Second is communication. Engagement is a two-way street. As contact centers have found, communication channels have opened up and multiplied with digitalization and social media, so employers need to also adjust to these methods of contact with their employees. Internal communications systems need to be expansive, efficient and digital to keep agent-management contact as open and effective as possible.

Third is gamification. Stress and boredom by an agent at a workplace can lead to dissatisfaction, and consequently, attrition. This chain of events can be avoided by motivating agents in an enjoyable way, enabling them to see their achievements and therefore perform better in the long run.

Fourth is an engaged customer service. A recent study found that companies with the highest levels of employee engagement have significantly higher productivity, profitability, and customer ratings, along with lower turnover and absenteeism. So, engaging the workforce isn't an option but a necessity for contact centers.

Managing aspects of the agent engagement includes development and training of employee skillsets. Good management needs to see the competency of each agent and look at how to best position them, as well as acknowledging and implementing the training that each agent needs. An employee that feels invested in will invest more of themselves in their work.

Having faith in senior figures and the direction of a company is vital for employees. There has been a need for a positive perception of leadership where the employee believes that the senior leaders of the organization are capable and moving the organization toward a better future.

The aspects of the present disclosure relate to creating a composite score that represents agent engagement at a workplace based various metrics associated with categories, custom weighting, and machine learning. For example, the disclosed technology is directed to capturing activity data associated with agent engagement, generating historical and predictive engagement data and scores, and highlighting areas of concern that can be acted upon, thereby helping agents improve the work engagement by agents. The historical and predictive engagement scores are respectively based on a composite score that includes aspects of reliability and contact handling (e.g., customer interaction). The respective areas further include categories for determining metrics of the respective categories. Metrics associated with some of categories may impact overall engagement more than other metrics. The disclosed technology generates task schedules based on the predictive engagement data and score for improving the agent engagement.

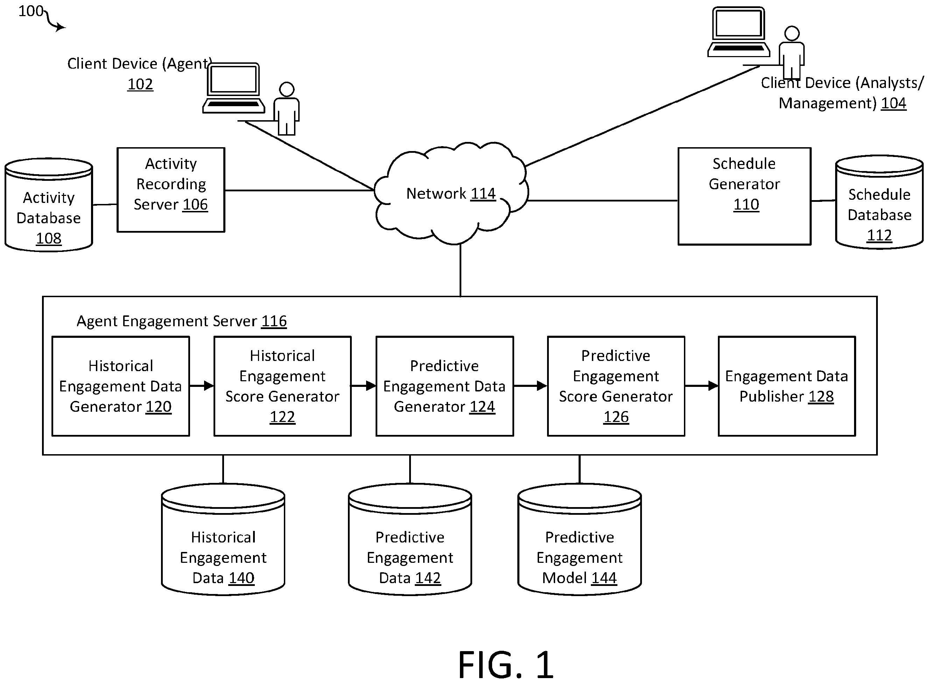

FIG. 1 illustrates an overview of an example system 100 for generating historical and predictive engagement data associated with contacts service agents in accordance with aspects of the present disclosure. A system 100 may include a client device (agent) 102, a client device (analysts / management) 104, an activity recording server 106, a schedule generator 110, agent engagement server 116, connected by network 114. The client device (agent) 102 is an example client device that an agent uses while working. For example, an agent may perform contact center tasks including taking contacts from customers using the client device (agent) 102. The client device (analysts / management) 104 is an example client device used to interactively review historical and predictive engagement data associated with agents and analytics data. The activity recording server 106 records work activities performed by agents. The activity recording server 106 includes an activity database 108. The activity database 108 stores activity data including data associated with customer contacts (date, time, duration, contacts scripts, task schedules assigned to agents and actual times, and the like). In aspects, the activity database 108 may be indexed for retrieving activity data based on various parameters including an agent identity, a date, a contact duration, a task assigned, the like. The schedule generator 110 generates schedules for agents to perform tasks. The schedule database 112 stores tasks assigned and scheduled for respective agents. Examples of tasks may include taking customer contacts, a break, and the like. The agent engagement server 116 generates various types of agent engagement data for analysis and causes the schedule generator 110 to generates schedules for agents based on predictive engagement data. The network 114 interconnects the client device (agent) 102, the client device (analysts / management) 104, the activity recording server 106, the schedule generator 110, and the agent engagement server 116. In examples, the network 114 may include the Internet and/or a local area network.

The agent engagement server 116 includes historical engagement data generator 120, historical engagement score generator 122, predictive engagement data generator 124, predictive engagement score generator 126, and engagement data publisher 128. The agent engagement server 116 may further include historical engagement data 140, predictive engagement data 142, and predictive engagement model 144.

The historical engagement data generator 120 generates historical engagement data associated with one or more agents engaging in contact support tasks with customers. In an example, the historical engagement data generator 120 retrieves activity data from the activity database 108. The activity data may include but not limited to agent turnover / retention, customer retention, resolution rate, abandon rate, reliability, time to effective / mastery, proficiency metrics (average handle time, first level resolution, , and quality scores), average time to answer, and the like. In aspects, average handle time (AHT) indicates a time it takes for an agent to engage with a contact. ART includes time spent both on contact and after contact associated with the contact. Quality scores may be determined manually or by machines based on various parameters associated with quality of an agent engaging with contacts.

Retention indicates the ability to keep an agent. Turnover represents a number of agents (e.g., as a percentage) who leave. Agent retention and turnover data may be retrieved from company payroll/HR systems. In some aspects, agent retention and turnover data may be approximated by number of agents no longer active (QM or WFM).

Customer retention indicates the ability of a company or product to retain its customers over some specified period, and effectively interact and provide what the customer is needing. Could customer sentiment be linked to this? Could survey data be tied to this?

A resolution rate represents a rate by which customer issues are resolved. The resolution rate indicates whether the agent could resolve the customer issues and/or whether the agents were willing to resolve the customer issues. In examples, the resolution rate may be measured in various ways: First Level Resolution (FLR): resolving an issue at the lowest level possible and not needing to escalate to a higher, more expensive, resource; First Contact Resolution (FCR): resolving an issue the first time a customer makes contact. No escalation or callback is needed.

Revenue indicates a generated either at a company or a contact center level. Revenue data provides various data including products, pricing, and reputation.

An abandon Rate refers to a rate of occurrence where contacts that are ended by the initiating customer before they reach an agent. The abandon may be a result of long wait times, which is heavily influenced by the company. The abandon rate data may be available from a telephony provider as a part of contact records.

Reliability indicates the ability for an agent showing up on time for work, take the appropriate time for breaks and lunch, and leave when their shift ends. The reliability data is controlled by respective agents, as the agents may be hourly and badging/punching to log paid times. Reliability may be used as a barometer for leaders (with HR approval). In aspects, the system may tie schedule to agent login/logout (or some actual phone state that indicates work) information. This could have shown actual utilization numbers instead of adherence or conformance which relies just on WFM data.

Time to Effective/Mastery indicates the amount of time (and cost) associated with hiring and training to ensure the agent is proficient. The data may be managed during a hiring process, company policies/training, etc. If the metrics of a proficient agent are standardized, then the same metrics could be used to track a new agent and when the new agent meets those parameters, they are considered proficient.

Average Speed of Answer (ASA) is a metric calculating the amount of time it takes to answer a typical contact once it has been routed to the contact center. The data is controlled by the contact center, IVR, staffing, an agent auto answer setup. ACD/Telephony provider has this info. Data may be available at various time intervals (Interval, Day, Hour, etc.). If the phones are setup for auto answer (beep tone, then customer), agents do not have much control over this metric. ART can impact ASA if contacts are taking longer than expected, ATA will be higher.

The historical engagement score generator 122 generates a historical engagement score associated with an agent based on the historical engagement data. In examples, the historical engagement score represents an aggregate of weighted values associated with categories of the historical engagement data. In aspects, one or more values associated with the respective categories of the historical engagement data may represent sub-scores of the historical engagement score. In some aspects, the historical engagement score is associated with one or more agents and indicates a degree of engagement by the one or more agents in the organization and/or customers. For example, an agent with a high score in the historical engagement data indicates that the agent is highly engaging in the interests of the organization and with customers by meeting expectations of scheduled tasks and customer satisfactions.

The predictive engagement data generator 124 generates predictive engagement data 142 associated with one or more agents. In aspects, the predictive engagement data 142 is based on the historical engagement data 140 and trends of the one or more agents seen in the historical engagement data. In examples, the predictive engagement data generator 124 may generate predictive engagement data 142 associated with future engagements in tasks by the one more agents by extrapolating the historical engagement data. Similarly to the historical engagement data, in examples, the predictive engagement data 142 may include agent turnover / retention, customer retention, resolution rate, abandon rate, reliability, time to effective / mastery, proficiency metrics (AHT, FLR, Quality), average time to answer, and the like.

In examples, the predictive engagement data generator 124 may use a predictive engagement model 144. The predictive engagement model 144 may be based on a machine learning model that is trained using training data (e.g., ground truth data including values of one or more categories in historical engagement data resulting in particular values at a later time). For example, the predictive engagement model 144 may indicate that an agent with absenteeism in the historical engagement data is likely to continue to exhibit absenteeism based on the trend as shown by the agent.

The predictive engagement score generator 126 generates a predictive engagement score associated with the one or more agents. In examples, the predictive engagement score represents an aggregate of weighted values associated with categories of the predictive engagement data 142. In aspects, one or more values associated with the respective categories of the predictive engagement data 142 may represent sub-scores of the predictive engagement score. In some aspects, the predictive engagement score is associated with one or more agents and indicates a degree of engagement by the one or more agents in the organization and/or with customers. For example, an agent with a high score in the predictive engagement data 142 indicates that the agent is expected to be highly engaging in the interests of the organization and with customers by meeting expectations of scheduled tasks and customer satisfactions.

In examples, predictive engagement score includes scores that corresponds to various categories of engagement including, but not limited to, reliability and contact handling. A predictive reliability score may include a composite scoring of an agent's future ability to effectively manage time. The ability to predict agent reliability for a day can improve forecast models by providing highly accurate, individual based, shrinkage numbers. For example, if a schedule contains agents with a history of absenteeism (e.g., a number of days of absence by the agent) or work avoidance, this can be factored in a day's schedule to improve overall forecasted shrinkage and in turn, provide better schedule accuracy.

Predictive contact handling score includes composite scoring of an agent's future ability to effectively manage customer interactions. The ability to predict agent customer handling allows training to happened at times when it can have most impact and be targeted at specific areas such as soft skills, de-escalation, etc. Also, predicting customer handling may allow re-alignment of which contacts an agent takes, allowing them to focus on areas of strength
Predictive engagement scoring may indicate a predictive view of how engaged an agent is with their customers and work. The ability for leaders to measure engagement levels allows them to act before a significant change in customer engagement or burnout/turnover.

Predictive shrinkage score predicts the amount of shrinkage (e.g., a reduction of resources in the organization) that may happen in a set time interval or day. The ability to improve accuracy of shrinkage numbers will improve forecasting and reduce over and understaffing situations.

A predictive turnover score relates to the likelihood an agent will have a new role within a specified or predetermined period of time (e.g., a week, a month, six months, etc.). The ability to predict the likelihood of and agent changing roles provides the company with the ability to intervene early and as needed. This allows a company to potentially save high value agents before they decide to change roles. Turnover and replacement of agent personnel is a high cost to contact centers, any reduction in turnover helps maintain knowledge in a contact center and reduces cost.

The engagement data publisher 128 publishes the engagement data and score associated with the one or more agents for review, analysis, and generating task schedules for the one or more agents. In aspects, the engagement data publisher 128 communicates with the schedule generator 110 as the schedule generator 110 generates task schedules for respective agents based on predictive engagement scores and data associated with the agents. By taking the predictive engagement scores and data in various categories into consideration in scheduling tasks, the schedule generator 110 generates schedules for tasks based on values associated with engagement categories, where the agents excel and where the agents need improvement. For example, the schedule generator 110 may schedule tasks of taking customer contacts during the morning hours for an agent and assign the agent to training on maintaining concentration and motivation when the predictive engagement data associated with the agent indicate relatively high engagement scores and data for tasks in the morning hours but less in the afternoon.

As will be appreciated, the various methods, devices, applications, features, etc., described with respect to FIG. 1 are not intended to limit the system 100 to being performed by the particular applications and features described. Accordingly, additional controller configurations may be used to practice the methods and systems herein and/or features and applications described may be excluded without departing from the methods and systems disclosed herein.

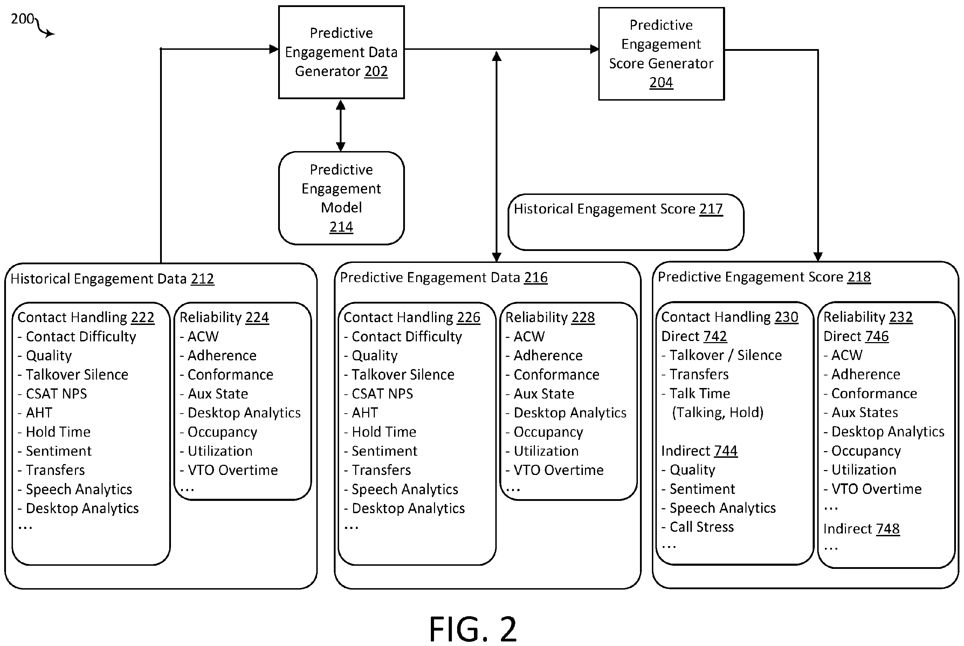

FIG. 2 illustrates an example system and data structures associated with historical and predictive engagement data and predictive model in accordance with aspects of the present disclosure. The system 200 includes predictive engagement data generator 202 and predictive engagement score generator 204.

In examples, the predictive engagement data generator 202 retrieves a set of historical engagement data 212 and, based on predictive engagement model 214, generates predictive engagement data 216. The predictive engagement score generator 204 generate, based on the predictive engagement data 216, the predictive engagement score 218.

The historical engagement data 212 indicates how an agent historically engaged in tasks including taking contacts from customers and generally supporting the customers. In aspects, the historical engagement data 212 includes data associated in categories of contact handling 222 and reliability 224. The contact handling 222 further includes various categories and/or classes including but not limited to, contact difficulty (e.g., a level of difficulties that the agent experienced in interacting with a customer), quality scores, talk-over, silence, AHT, hold time, sentiment, transfers, speech analytics, desktop analytics, and the like. The reliability 224 includes after contact work, adherence, conformance, auxiliary state, desktop analytics, occupancy, utilization, overtime, and the like. In aspects, a quality score represents a human- or machine-generated score associated with how an agent handled a contact. Talk-over / silence indicates an amount of time an agent and a contact talked over each other or neither party is talking. Hold time indicates a time an agent put a contact on hold, in case the agent avoids having the contact hear what the agent is doing or whom the agent may be interacting with. Sentiment represents a mood of contact. Sentiment may be one of negative, neutral, or positive sentiment. Transfers indicate when an agent moves the contact to another party and leaves the conversation. Speech analytics indicate an ability to spot words and phrases that are of interest. Desktop analytics indicate an ability to spot applications, website, or tools of interest. After contact work (ACW) indicates a time spent by an agent after a voice contact has ended but the agent is still tied to handling the contact. Examples of after contact work include data entry and organizing notes. Adherence indicates how closely an agent matches work to schedule. Conformance indicates a time that an agent spent work compared to time the agent was scheduled to work. Auxiliary state (Aux state) indicates doing a scheduled work that is not related to contact handling (e.g., meetings and trainings. Occupancy indicates a percentage of time an agent is actively engaged in interaction handling activities as compared to a total time logged in. Utilization represents an amount of time that an agent spend time logged-in, handling and expecting contacts, while being present in the contact center. Voluntary time off (VTO) indicates a time an agent takes time off when the contact center is overstaffed. The agent is scheduled but not needed and thus can leave work if the agent wants to. Overtime indicates extra hours when an agent works or can work.

The predictive engagement model 214 may include a trained machine learning model that is operable to generate the predictive engagement data 216 based on the historical engagement data 212. The predictive engagement model 214 may be associated with a machine learning model including a neural network, a transformer model, a deep learning model, etc. In aspects, the predictive engagement model 214 is trained and/or fine-tuned for accurately predicting agent predefined categories of agent engagement based on historical engagement data associated with one or more agents.

The predictive engagement data 216 may include data associated with categories in contact handling 226 and reliability 228. Contact handling 226 further includes various categories and/or classes including, but not limited to, contact difficulty (e.g., a level of difficulties that the agent experienced in interacting with a customer), quality, talk-over silence, CSAT NPS, AHT, hold time, sentiment, transfers, speech analytics, desktop analytics, and the like. The reliability 228 includes ACW, adherence, conformance, aux state, desktop analytics, occupancy, utilization, VTO overtime, and the like.

The predictive engagement score generator 204 generates predictive engagement score 218 based on the predictive engagement data 216. The predictive engagement score may include an aggregate of weight sum of the predictive scores that correspond to the categories including, but not limited to, contact handling 230 and reliability 232. The contact handling 230 category comprises direct 742 and indirect 744 subcategories. The direct 742 subcategory comprises talk-over / silence, transfers from the agent to another agent or a supervisor, talk time (e.g., talking, on hold). The indirect 744 may include quality, sentiment, speech analytics, and contact stress. The reliability 232 comprises direct 746 and indirect 748 subcategories. The direct 746 comprises ACW, adherence, conformance, aux states, desktop analytics, occupancy, utilization, and VTO overtime. The indirect 748 subcategory includes indirect contact related or indirect reliability. Indirect contact related includes speech phrase hits. Speech phrase hits are not generated by a human, but is machine-generated based on voice-to-text transcriptions, accuracy of the transcription and what phase is being looked for. The indirect subcategory may be automatically generated while an agent has a limited or no control over the subcategory. Indirect reliability includes VTO and Overtime requests. An agent may not have an ability to take overtime because of out-of-work commitments or take VTO for financial concerns. Indirect reliability includes aspects that impacts agent's reliability but not under agent's control. Examples of the indirect reliability include taking a mass transit and having a bus be late or experiencing a break-down. In aspects, the predictive engagement score generator 204 uses a predefined set of weights associated with the respective categories and subcategories in generating the aggregate of weighted sum.

In aspects, the category of contact handling in agent engagement reflects how the organization interacts externally through the customers. For example, if an agent has great customer skills but poor reliability, coaching can focus on aligning with scheduled activities and making sure to get to work on time. The category of reliability reflects agent's desire to align with task schedules and task assignments. If an agent is trying to keep aligned with schedule, coaching can focus on contact handling and soft skills. The fact the agent is trying to adhere to schedule and not avoid contacts indicated they are trying, but maybe struggling with how to do their job.

As will be appreciated, the various methods, devices, applications, features, etc., described with respect to FIG. 2 are not intended to be limited to use of the system 200, rather the system 200 is provided as an exemplary system that may be used by the aspects disclosed herein. Accordingly, additional data structures or configurations may be used to practice the methods and systems herein and/or features and applications described may be excluded without departing from the methods and systems disclosed herein.

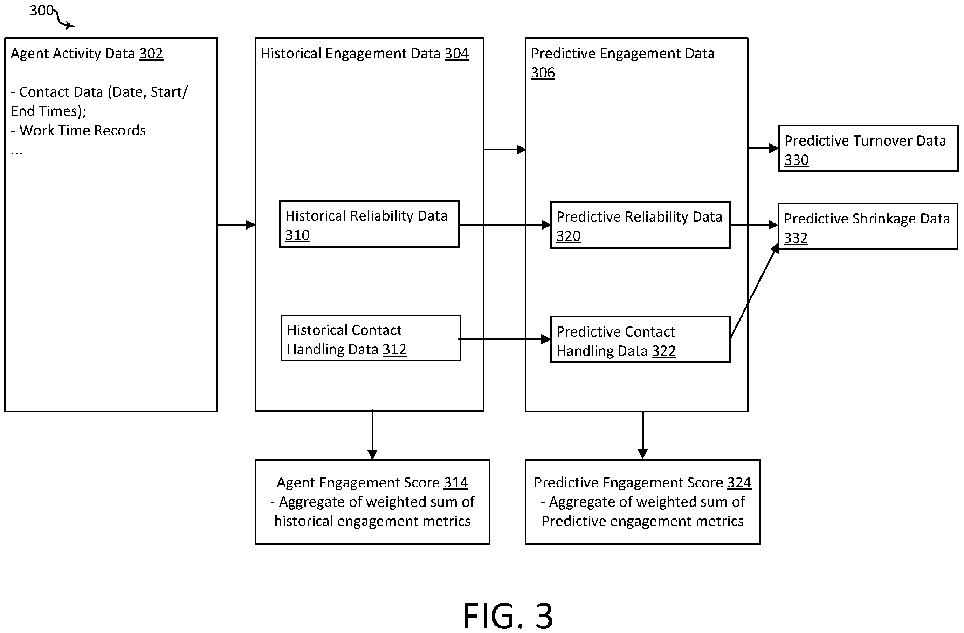

FIG. 3 illustrates example data in accordance with aspects of the present disclosure. The example data 300 includes agent activity data 302, historical engagement data 304, and predictive engagement data 306. The agent activity data 302 includes contact data (e.g., date of a contact, start and end times, and the like), work time records, etc.

The historical engagement data 304 is generated based on agent activity data 302 by analyzing sentiment of dialogues between an agent and a customer during a support contact, trends of time records of the agent, and/or other analytics both disclosed herein and known to the art. The historical engagement data 304 comprise historical reliability data 310 and historical contact handling data 312. Agent engagement score 314 is generated based on the historical engagement data 304. The agent engagement score 314 is based on an aggregate of weighted values of historical engagement categories (e.g., metrics) corresponding to the historical engagement data 304.

The predictive engagement data 306 is generated based on the historical engagement data 304 by using a predictive engagement model (not shown). The predictive engagement data 306 includes predictive reliability data 320 and predictive contact handling data 322. In aspects, the predictive reliability data 320 is based on the historical reliability data 310. Similarly, the predictive contact handling data 322 is based on the historical contact handling data 312. The predictive engagement data 306 is the basis for determining a predictive engagement score 324. The predictive engagement score 324 is based on an aggregate of weighted values of predictive engagement categories (e.g., metrics) corresponding to the predictive engagement data 306.

The predictive engagement data 306 is the basis for determining a predictive turnover data 330. In examples, the predictive turnover data 330 indicates a degree of agents (e.g., employees) leaving the organization and/or new agents joining the organization. Turnover predicts the likelihood an agent will have a new role within a specified or predetermined period of time. The ability to predict the likelihood of and agent changing roles provides leaders and the company the ability to intervein early and as needed. This allows companies to potentially save high value agents before they decide to change roles. Turnover and replacement of agent personnel is a high cost to contact centers, any reduction helps maintain knowledge in a contact center and reduces cost.

In further examples, a combination of the predictive reliability data 320 and the predictive contact handling data 322 may be the basis for determining predictive shrinkage data 332. Shrinkage predicts the amount of shrinkage that may happen in a set time interval or day. The ability to improve accuracy of shrinkage numbers will improve forecasting and reduce over and understaffing situations.

As will be appreciated, the various methods, devices, applications, features, etc., described with respect to FIG. 3 is not intended to limit use of the example data 300. Accordingly, additional and/or alternative processes and configurations may be used to practice the methods and systems herein and/or features and applications described may be excluded without departing from the methods and systems disclosed herein.

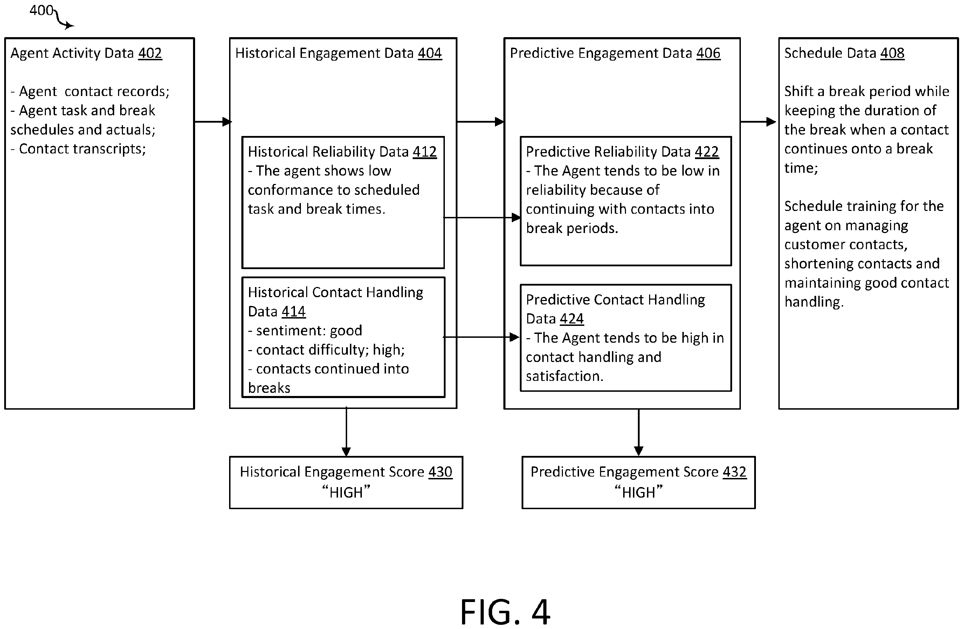

FIG. 4 illustrates example data associated with generating historical and predictive engagement data and schedules in accordance with aspects of the present disclosure. Agent activity data 402 includes data indicating activity records of an agent at a workplace. Examples of the agent activity data 402 include agent contact records, agent task and break schedules and actual times, contact transcripts, and the like. In examples, the agent activity data 402 include start time and end time of a task scheduled and actuals for responding to incoming contacts from customers and break times. The agent activity data 402 in the example further include start times and end times of incoming customer contacts and transcripts that correspond to the respective customer contacts.

Historical engagement data 404 includes analytics data for activities associated with the agent. The historical engagement data 404 is generated based on the agent activity data 402. The historical engagement data 404 includes historical reliability data 412 and historical contact handling data 414. In examples, the historical reliability data 412 indicate that the agent shows low conformance on scheduled tasks and break times. That is, the analytics data indicate that the agent was not following the schedules of tasks. The historical contact handling data 414 indicates, in examples, that the sentiment associated with customer contacts was good. A level of difficulty in handling contacts during customer interactions was relatively high (e.g., handled difficult customers). The example historical contact handling data 414 further indicate that customer contacts tend to continue into times schedules for the agent to take breaks.

According to the example disclosed herein, results from the combination of the historical reliability data 412 and the historical contact handling data 414 is mixed. For example, the historical reliability data 412 for the agent indicates a level of reliability may be low. In the example, the agent did not accurately follow the scheduled times for taking customer contacts and taking breaks. On the other hand, the agent was not following the schedule because the agent was taking interactions with contacts (e.g., customers) whose level of difficult was relatively high. Continuing with the example, the sentiment determined based upon the contacts indicate that the agent was successful in satisfying the contact. Because satisfying the contacts is the organization's best interest, categories in the historical contact handling data 414 would weigh more than the historical reliability data 412, the overall historical engagement score 430 associated with the agent would be "HIGH."

Predictive engagement data 406 indicates predicted reliability and contact handling associated with the agent. The predictive engagement data 406 in the examples include predictive reliability data 422 and predictive contact handling data 424 associated with the agent. In examples, the predictive reliability data 422 may indicate: the agent tends to be low in reliability because of the agent unlikely to follow tasks and break times as scheduled because continuing with contacts, unless the schedule for task assignment and break times is changed. The predictive contact handling data 424 may indicate that the agent tends to be high on contact handling and satisfaction. Given the possibility of adjusting future schedules for tasks and break times, a predictive engagement score 432 for the agent is "HIGH."

Schedule data 408 indicates schedules for tasks and break times for the agent. In aspects, a task scheduler (e.g., the schedule generator 110 as shown in FIG. 1) schedules tasks and break times based on the predictive engagement data 406. In examples, the schedule data 408 schedule tasks by shifting a break period while keeping the duration of the break time when a contact continues into a break time. The examples further indicate scheduling the agent for enrolling in a training for the agent on managing customer contacts, how to effectively shorten contacts while maintaining good contact handling.

In examples, the present disclosure provides predictive answers to questions based on aspects of reliability and contact handling related to how schedules for agents influence: Reliability - Does the type, time and day of a shift impact agents, reliability? Contact Handling - Does the type, time and day of a shift impact agents, reliability? Does contact difficulty vary with the time of day? How organization/leader influences: Reliability - Do agents have higher or lower reliability within a team or management structure? Contact Handling - Does a team or management structure impact the quality of a contact interaction?

How a location influences: Reliability - Do agents have lower or higher reliability working from home? Or are they distracted with family, life? Contact Handling - Are agents able to connect to customers better when working at home or office?

How contact types influences: Reliability - harder contacts, more stress? Contact Handling - does contact type lead to different success metrics? How to measure employee engagement? Is it different for remote employees vs. hybrid vs. in office? How do you know when an employee is burnt out or disengaged? Do you use metrics to determine employee burn out or is it conversational based? And why? Use of work time and rest time... stayed over the rest time to continue taking the ongoing customer contact... positive or negative engagement.?

In aspects, the predictive engagement model is trained through supervised learning, based on ground truth data indicating historical engagement data that result in specific engagement states of agents and meet specific use cases of analyzing agent engagement.

As will be appreciated, the various methods, devices, applications, features, etc., described with respect to FIG. 4 are not intended to be limited to use of the data 400, rather the data 400 is provided as an example system that may be used by the aspects disclosed herein. Accordingly, additional data structures or configurations may be used to practice the methods and systems herein and/or features and applications described may be excluded without departing from the methods and systems disclosed herein.

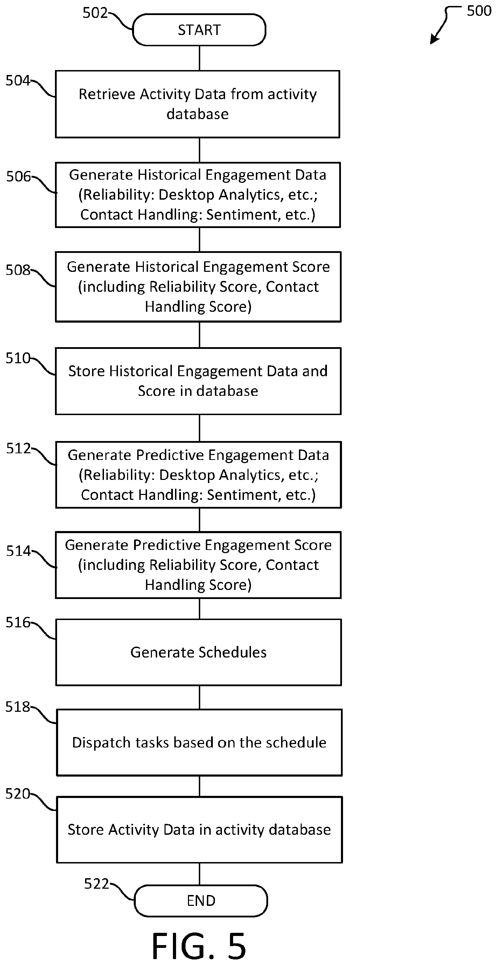

FIG. 5 illustrates an example method 500 for generating historical and predictive engagement data in accordance with aspects of the present disclosure. A general order of the operations for the example method 500 is shown in FIG. 5. Generally, the method 500 begins with start operation 502 and end with end operation 522. The method 500 may include more or fewer steps or may arrange the order of the steps differently than those shown in FIG. 5. The method 500 can be executed as a set of computer-executable instructions executed by a cloud system and encoded or stored on a computer readable medium. Further, the method 500 can be performed by gates or circuits associated with a processor, an ASIC, an FPGA, a SOC or other hardware device. Hereinafter, the method 500 shall be explained with reference to the systems, components, devices, modules, software, data structures, data characteristic representations, signaling diagrams, methods, etc., described in conjunction with FIGS. 1, 2, 3, 4, 6, and 7.

Following start operation 502, the method 500 begins with retrieve operation 504, which retrieves activity data from an activity database. In aspects, the retrieve operation 504 retrieves activity data of one or more agents from an activity data recording server (e.g., the activity recording server 106 as shown in FIG. 1).

At generate historical engagement data operation 506, the historical engagement data is generated based on the activity data. In aspects, the historical engagement data include historical reliability data and historical contact handling data. The historical engagement data is based on analytics on the activity data associated with an agent. Categories within the historical engagement data may include reliability, desktop analytics of the agent's activities, and sentiment associated with contacts with customers as performed by the agent.

At generate historical engagement score operation 508, the historical engagement score is generated based on the historical engagement data. In examples, the historical engagement score is an aggregate of weighted values associated with respective categories of the historical engagement. Example categories of the historical engagement include reliability and contact handling. The category of reliability may further include, but not limited to, ACW, adherence, conformance, aux states, desktop analytics, occupancy, utilization, and a VTO overtime. The category of contact handling may include talk-over, silence, transfers, talk time (e.g., talking time, on-hold time, and the like), quality, sentiment, speech analytics, contact stress, and the like.

At store historical engagement data and score operation 510, the historical engagement data and score are stored in a database (e.g., the historical engagement data 140 as shown in FIG. 1). In aspects, the databased may be indexed by various parameters including identifiers of agents, contacts, sentiment values of contacts, a variance between scheduled tasks and performed tasks, and the like.

At generate predictive engagement data operation 512, predictive engagement data associated with an agent is generated based on the historical engagement data using a predictive engagement model. Categories within the historical engagement data may include reliability, desktop analytics of the agent's activities, and sentiment associated with contacts with customers as performed by the agent. The predictive engagement model is a model trained to predict agent engagement in a variety of categories based on historical engagement data. In aspects, the model may include a neural network including multiple layers with parameter values that characterize how categories of the historical engagement data correlate to values in the variety of categories of the predictive engagement data. In some aspects, the predictive engagement model is based on a transformer model that has been trained and fine-tuned for predicting performance of agent engagement tasks based on the historical engagement data.

At generate predictive engagement score operation 514, one or more predictive engagement scores is generated based on the predictive engagement data. The predictive engagement score is based on an aggregate of weighted values of predictive engagement categories (e.g., metrics) corresponding to the predictive engagement data. In aspects, the predictive engagement score includes a predictive reliability score and a predictive contact handling score. Example categories of the predictive engagement include reliability and contact handling. The category of reliability may further include, but not limited to, ACW, adherence, conformance, aux states, desktop analytics, occupancy, utilization, and a VTO overtime. The category of contact handling may include talk-over / silence, transfers, talk time (e.g., talking time, on-hold time, and the like), quality, sentiment, speech analytics, contact stress, and the like.

At generate schedule operation 516, a schedule for work, including performing tasks, taking breaks, and the like, is generated based on the predictive engagement data. In examples, the generate schedule operation 516 may include publishing the predictive engagement data to a scheduler.

At dispatch operation 518, tasks are dispatched for an agent according to the schedule. In examples, the dispatch operation 518 include notifying the agent about a scheduled task. The dispatch operation 518 may further include starting to monitor the agent and capture activity data associated with the task. For example, the dispatch operation 518 may alert the agent about an assigned task through a calendar application. Once the agent starts the task (e.g., taking customer contacts), the dispatch operation 518 may initiate work tracking applications about the task being started.

At store activity data operation 520, activity data associated with the agent may be stored in a database (e.g., the activity database 108 as shown in FIG. 1). In examples, the activity data may include contact records, task and break schedules and actual times, contact transcripts, and the like. The method 500 ends with the end operation 522.

As should be appreciated, operations 502-522 are described for purposes of illustrating the present methods and systems and are not intended to limit the disclosure to a particular sequence of steps, e.g., steps may be performed in different order, additional steps may be performed, and disclosed steps may be excluded without departing from the present disclosure.

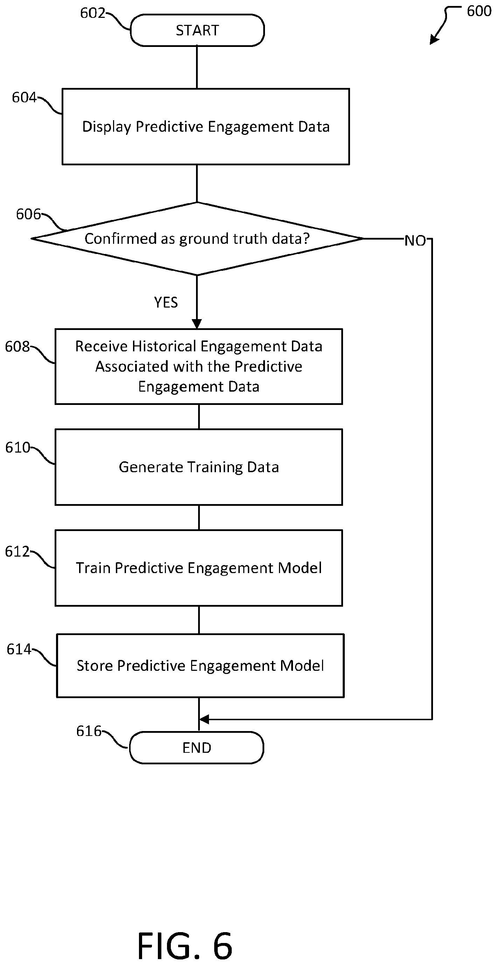

FIG. 6 illustrates an example method 600 for training a predictive model in accordance with aspects of the present disclosure. A general order of the operations for the example method 600 is shown in FIG. 6. Generally, the method 600 begins with start operation 602 and end with end operation 616. The method 600 may include more or fewer steps or may arrange the order of the steps differently than those shown in FIG. 6. The method 600 can be executed as a set of computer-executable instructions executed by a cloud system and encoded or stored on a computer readable medium. Further, the method 600 can be performed by gates or circuits associated with a processor, an ASIC, an FPGA, a SOC or other hardware device. Hereinafter, the method 600 shall be explained with reference to the systems, components, devices, modules, software, data structures, data characteristic representations, signaling diagrams, methods, etc., described in conjunction with FIGS. 1, 2, 3, 4, 5, and 7.

Following start operation 602, the method 600 begins with display operation 604, which displays predictive engagement data. At confirm operation 606, whether the displayed predictive engagement data represents ground truth data is confirmed. In examples, the confirm operation 606 confirms the ground truth data based on an interactively input from an operator.

When the displayed predictive engagement data are confirmed as ground truth data, the method 600 proceeds to receive historical engagement data operation 608. At the receive historical engagement data operation 608, the historical engagement data associated with the predictive engagement data are received from a historical engagement data store.

At generate training data 610, training data for training a predictive engagement model is generated. In aspects, the training data includes a pair of the historical engagement data and the predictive engagement data. A goal of training the predictive engagement model is to predict the predictive engagement data based on the historical engagement data.

At train predictive engagement model operation 612, the predictive engagement model is trained. In aspects, the train predictive engagement model operation 612 includes supervised model learning using the training data.

As should be appreciated, operations 602-616 are described for purposes of illustrating the present methods and systems and are not intended to limit the disclosure to a particular sequence of steps, e.g., steps may be performed in different order, additional steps may be performed, and disclosed steps may be excluded without departing from the present disclosure.

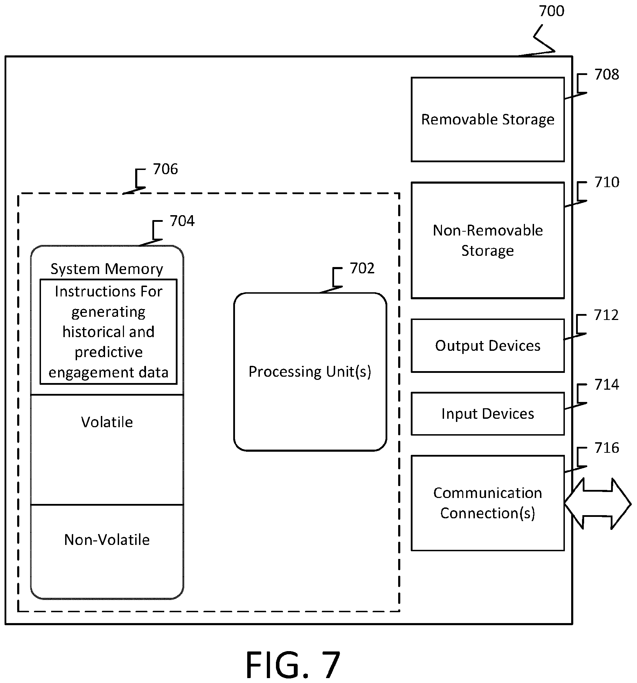

FIG. 7 illustrates a simplified block diagram of a device with which aspects of the present disclosure may be practiced in accordance with aspects of the present disclosure. The device may be a mobile computing device, for example. One or more of the present embodiments may be implemented in an operating environment 700. This is only one example of a suitable operating environment and is not intended to suggest any limitation as to the scope of use or functionality. Other well-known computing systems, environments, and/or configurations that may be suitable for use include, but are not limited to, personal computers, server computers, handheld or laptop devices, multiprocessor systems, microprocessor-based systems, programmable consumer electronics such as smartphones, network PCs, minicomputers, mainframe computers, distributed computing environments that include any of the above systems or devices, and the like.

In its most basic configuration, the operating environment 700 typically includes at least one processing unit 702 and memory 704. Depending on the exact configuration and type of computing device, memory 704 (e.g., instructions for generating historical and predictive engagement data as disclosed herein) may be volatile (such as RAM), non-volatile (such as ROM, flash memory, etc.), or some combination of the two. This most basic configuration is illustrated in FIG. 7 by dashed line 706. Further, the operating environment 700 may also include storage devices (removable, 708, and/or non-removable, 710) including, but not limited to, magnetic or optical disks or tape. Similarly, the operating environment 700 may also have input device(s) 714 such as remote controller, keyboard, mouse, pen, voice input, on-board sensors, etc. and/or output device(s) 712 such as a display, speakers, printer, motors, etc. Also included in the environment may be one or more communication connections 716, such as LAN, WAN, a near-field communications network, a cellular broadband network, point to point, etc.

Operating environment 700 typically includes at least some form of computer readable media. Computer readable media can be any available media that can be accessed by the at least one processing unit 702 or other devices comprising the operating environment. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other tangible, non-transitory medium which can be used to store the desired information. Computer storage media does not include communication media. Computer storage media does not include a carrier wave or other propagated or modulated data signal.

Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media.

The operating environment 700 may be a single computer operating in a networked environment using logical connections to one or more remote computers. The remote computer may be a personal computer, a server, a router, a network PC, a peer device or other common network node, and typically includes many or all of the elements described above as well as others not so mentioned. The logical connections may include any method supported by available communications media. Such networking environments are commonplace in offices, enterprisewide computer networks, intranets and the Internet.

The description and illustration of one or more aspects provided in this application are not intended to limit or restrict the scope of the disclosure as claimed in any way. The claimed disclosure should not be construed as being limited to any aspect, for example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

The present disclosure relates to systems and methods for analyzing historical data and generating predictive engagement associated with an agent at workplace. A computer implemented method, comprises retrieving activity data associated with an agent from an activity database; generating, based on the activity data, historical engagement data, wherein the historical engagement data includes analytics data associated with the agent engaging in a task, and wherein the historical engagement data comprise historical reliability data and historical contact handling data; generating, based on the historical engagement data, a historical engagement score associated with the agent, wherein the historical engagement score comprises an aggregate of weighted values associated with a plurality of categories of the historical engagement data, and the plurality of categories include historical reliability and historical contact handling; generating, based on the historical engagement data, predictive engagement data using a predictive engagement model, wherein the predictive engagement data indicates future engagement of the agent in future tasks, the predictive engagement model predicts the predictive engagement data based on the historical engagement data, and the predictive engagement data comprise predictive reliability data and predictive contact handling data; generating, based on the predictive engagement data, a predictive engagement score, wherein the predictive engagement score comprises a predictive reliability score and a predictive contact handling score; generating, based on the predictive engagement data, schedule data associated with the agent, wherein the schedule data includes attribute data associated with one or more tasks; and transmitting the schedule data to a client device associated with the agent. The computer implemented method further comprises storing the activity data associated with the agent in the activity database, wherein the activity database includes data associated with customer calls, and wherein the activity database is indexed for retrieving activity data with one or more parameters including an agent identity, a date, a call duration, and the task assigned to the agent. The plurality of categories of the historical engagement data comprises the historical reliability and historical contact handling, the historical reliability further comprises at least one of: after call work, adherence, conformance associated with a first time the agent spent working compared to a second time the agent was scheduled to work, or voluntary time off; and wherein the historical contact handling includes at least one of: contact difficulty, quality, average handline time associated with a contact, hold time, sentiment, speech analytics, or desktop analytics. The computer implemented method further comprises displaying predictive engagement data associated with the agent performing the one or more tasks; interactively receiving an indication of whether the displayed predictive engagement data represent ground truth data; receiving historical engagement data associated with the predictive engagement data as the ground truth data; training the predictive engagement model using a combination of the historical engagement data and the predictive engagement data as training data; and storing the trained predictive engagement model. The computer implemented method further comprises generating, based on the predictive engagement data, predictive turnover data, wherein the predictive turnover data predict a rate of resource turnover; and generating, based on a combination of the predictive reliability data and the predictive contact handling data, predictive shrinkage data, wherein the predictive shrinkage data predict a likelihood of resource shrinkage. The predictive engagement model includes a neural network, and wherein the neural network, once trained, outputs the predictive engagement data associated with the agent based on the historical engagement data associated with the agent. The predictive engagement score is associated with the agent, and wherein the predictive engagement score represents a degree of engagement by the agent associated with a customer. The predictive reliability score is associated with the agent, and wherein the predictive reliability score is based on a number of days of absence associated with the agent. The predictive contact handling score is associated with the agent, and wherein the predictive contact handling score indicates a degree of future engagement with a customer by the agent, and wherein the future engagement with the customer includes de-escalation.

Another aspect of the technology relates to a system for analyzing historical data and generating predictive engagement associated with an agent at workplace. The system comprises a memory; and a processor configured to execute a method comprising: retrieving activity data associated with an agent from an activity database; generating, based on the activity data, historical engagement data, wherein the historical engagement data includes analytics data associated with the agent engaging in a task, and wherein the historical engagement data comprise historical reliability data and historical contact handling data; generating, based on the historical engagement data, a historical engagement score associated with the agent, wherein the historical engagement score comprises an aggregate of weighted values associated with a plurality of categories of the historical engagement data, and the plurality of categories include historical reliability and historical contact handling; generating, based on the historical engagement data, predictive engagement data using a predictive engagement model, wherein the predictive engagement data indicates future engagement of the agent in future tasks, the predictive engagement model predicts the predictive engagement data based on the historical engagement data, and the predictive engagement data comprise predictive reliability data and predictive contact handling data; generating, based on the predictive engagement data, a predictive engagement score, wherein the predictive engagement score comprises a predictive reliability score and a predictive contact handling score; generating, based on the predictive engagement data, schedule data associated with the agent, wherein the schedule data includes attribute data associated with one or more tasks; and transmitting the schedule data to a client device associated with the agent. The processor is further configured to execute a method comprising: storing the activity data associated with the agent in the activity database, wherein the activity database includes data associated with customer calls, and wherein the activity database is indexed for retrieving activity data with one or more parameters including an agent identity, a date, a call duration, and the task assigned to the agent. The plurality of categories of the historical engagement data comprises the historical reliability and historical contact handling, the historical reliability further comprises at least one of: after call work, adherence, conformance associated with a first time the agent working compared to a second time the agent was scheduled to work, or voluntary time off; and wherein the historical contact handling includes at least one of: contact difficulty, quality, average handline time associated with a contact, hold time, sentiment, speech analytics, or desktop analytics. The processor is further configured to execute a method comprising: displaying predictive engagement data associated with the agent performing the one or more tasks; interactively receiving an indication of whether the displayed predictive engagement data represent ground truth data; receiving historical engagement data associated with the predictive engagement data as the ground truth data; training the predictive engagement model using a combination of the historical engagement data and the predictive engagement data as training data; and storing the trained predictive engagement model. The processor is further configured to execute a method comprising: generating, based on the predictive engagement data, predictive turnover data, wherein the predictive turnover data predict a rate of resource turnover; and generating, based on a combination of the predictive reliability data and the predictive contact handling data, predictive shrinkage data, wherein the predictive shrinkage data predict a likelihood of resource shrinkage. The predictive engagement model includes a neural network, and wherein the neural network, once trained, outputs the predictive engagement data associated with the agent based on the historical engagement data associated with the agent.

In still further aspects, the technology relates to a device for analyzing historical data and generating predictive engagement associated with an agent at workplace. The device comprises a memory; and a processor configured to execute a method comprising: retrieving activity data associated with an agent from an activity database; generating, based on the activity data, historical engagement data, wherein the historical engagement data includes analytics data associated with the agent engaging in a task, and wherein the historical engagement data comprise historical reliability data and historical contact handling data; generating, based on the historical engagement data, a historical engagement score associated with the agent, wherein the historical engagement score comprises an aggregate of weighted values associated with a plurality of categories of the historical engagement data, and the plurality of categories include historical reliability and historical contact handling; generating, based on the historical engagement data, predictive engagement data using a predictive engagement model, wherein the predictive engagement data indicates future engagement of the agent in future tasks, the predictive engagement model predicts the predictive engagement data based on the historical engagement data, and the predictive engagement data comprise predictive reliability data and predictive contact handling data; generating, based on the predictive engagement data, a predictive engagement score, wherein the predictive engagement score comprises a predictive reliability score and a predictive contact handling score; generating, based on the predictive engagement data, schedule data associated with the agent, wherein the schedule data includes attribute data associated with one or more tasks; and transmitting the schedule data to a client device associated with the agent. The processor is further configured to execute a method comprising: storing the activity data associated with the agent in the activity database, wherein the activity database includes data associated with customer calls, and wherein the activity database is indexed for retrieving activity data with one or more parameters including an agent identity, a date, a call duration, and the task assigned to the agent. The processor is further configured to execute a method comprising: displaying predictive engagement data associated with the agent performing the one or more tasks; interactively receiving an indication of whether the displayed predictive engagement data represent ground truth data; receiving historical engagement data associated with the predictive engagement data as the ground truth data; training the predictive engagement model using a combination of the historical engagement data and the predictive engagement data as training data; and storing the trained predictive engagement model. The processor is further configured to execute a method comprising: generating, based on the predictive engagement data, predictive turnover data, wherein the predictive turnover data predict a rate of resource turnover; and generating, based on a combination of the predictive reliability data and the predictive contact handling data, predictive shrinkage data, wherein the predictive shrinkage data predict a likelihood of resource shrinkage. The predictive engagement model includes a neural network, and wherein the neural network, once trained, outputs the predictive engagement data associated with the agent based on the historical engagement data associated with the agent.

The present disclosure relates to systems and methods for cataloging and retrieving data. Any of the one or more above aspects in combination with any other of the one or more aspect. Any of the one or more aspects as described herein.

## Claims

1. A computer implemented method, comprising:
retrieving activity data associated with an agent from an activity database;
generating, based on the activity data, historical engagement data, wherein the historical engagement data includes analytics data associated with the agent engaging in a task, and wherein the historical engagement data comprise historical reliability data and historical contact handling data;
generating, based on the historical engagement data, a historical engagement score associated with the agent, wherein the historical engagement score comprises an aggregate of weighted values associated with a plurality of categories of the historical engagement data, and the plurality of categories include historical reliability and historical contact handling;
generating, based on the historical engagement data, predictive engagement data using a predictive engagement model, wherein the predictive engagement data indicates future engagement of the agent in future tasks, the predictive engagement model predicts the predictive engagement data based on the historical engagement data, and the predictive engagement data comprise predictive reliability data and predictive contact handling data;
generating, based on the predictive engagement data, a predictive engagement score, wherein the predictive engagement score comprises a predictive reliability score and a predictive contact handling score;
generating, based on the predictive engagement data, schedule data associated with the agent, wherein the schedule data includes attribute data associated with one or more tasks; and
transmitting the schedule data to a client device associated with the agent.

2. The computer implemented method of claim 1, further comprising:
storing the activity data associated with the agent in the activity database, wherein the activity database includes data associated with customer calls, and wherein the activity database is indexed for retrieving activity data with one or more parameters including an agent identity, a date, a call duration, and the task assigned to the agent.

3. The computer implemented method of claim 1 or claim 2, wherein the plurality of categories of the historical engagement data comprises the historical reliability and historical contact handling, the historical reliability further comprises at least one of:
after call work,
adherence,
conformance associated with a first time the agent spent working compared to a second time the agent was scheduled to work, or
voluntary time off; and
wherein the historical contact handling includes at least one of:
contact difficulty,
quality,
average handline time associated with a contact,
hold time,
sentiment,
speech analytics, or
desktop analytics.

4. The computer implemented method of any preceding claim, further comprising:
displaying predictive engagement data associated with the agent performing the one or more tasks;
interactively receiving an indication of whether the displayed predictive engagement data represent ground truth data;
receiving historical engagement data associated with the predictive engagement data as the ground truth data;
training the predictive engagement model using a combination of the historical engagement data and the predictive engagement data as training data; and
storing the trained predictive engagement model.

5. The computer implemented method of any preceding claim, further comprising:
generating, based on the predictive engagement data, predictive turnover data, wherein the predictive turnover data predict a rate of resource turnover; and
generating, based on a combination of the predictive reliability data and the predictive contact handling data, predictive shrinkage data, wherein the predictive shrinkage data predict a likelihood of resource shrinkage.

6. The computer implemented method of any preceding claim, wherein the predictive engagement model includes a neural network, and wherein the neural network, once trained, outputs the predictive engagement data associated with the agent based on the historical engagement data associated with the agent.

7. The computer implemented method of any preceding claim, wherein the predictive engagement score is associated with the agent, and wherein the predictive engagement score represents a degree of engagement by the agent associated with a customer.

8. The computer implemented method of any preceding claim, wherein the predictive reliability score is associated with the agent, and wherein the predictive reliability score is based on a number of days of absence associated with the agent.

9. The computer implemented method of any preceding claim, wherein the predictive contact handling score is associated with the agent, and wherein the predictive contact handling score indicates a degree of future engagement with a customer by the agent, and wherein the future engagement with the customer includes de-escalation.

10. A system comprising:at least one processor; and
at least one memory storing instructions that when executed by the at least one processor, cause the system to perform the method of any preceding claim.

11. A device, comprising:
a memory; and
a processor configured to execute a method comprising:
retrieving activity data associated with an agent from an activity database;
generating, based on the activity data, historical engagement data, wherein the historical engagement data includes analytics data associated with the agent engaging in a task, and wherein the historical engagement data comprise historical reliability data and historical contact handling data;
generating, based on the historical engagement data, a historical engagement score associated with the agent, wherein the historical engagement score comprises an aggregate of weighted values associated with a plurality of categories of the historical engagement data, and the plurality of categories include historical reliability and historical contact handling;
generating, based on the historical engagement data, predictive engagement data using a predictive engagement model, wherein the predictive engagement data indicates future engagement of the agent in future tasks, the predictive engagement model predicts the predictive engagement data based on the historical engagement data, and the predictive engagement data comprise predictive reliability data and predictive contact handling data;
generating, based on the predictive engagement data, a predictive engagement score, wherein the predictive engagement score comprises a predictive reliability score and a predictive contact handling score;
generating, based on the predictive engagement data, schedule data associated with the agent, wherein the schedule data includes attribute data associated with one or more tasks; and
transmitting the schedule data to a client device associated with the agent.

12. The device of claim 11, the processor further configured to execute a method comprising:
storing the activity data associated with the agent in the activity database, wherein the activity database includes data associated with customer calls, and wherein the activity database is indexed for retrieving activity data with one or more parameters including an agent identity, a date, a call duration, and the task assigned to the agent.

13. The device of claim 11 or claim 12, the processor further configured to execute a method comprising:
displaying predictive engagement data associated with the agent performing the one or more tasks;
interactively receiving an indication of whether the displayed predictive engagement data represent ground truth data;
receiving historical engagement data associated with the predictive engagement data as the ground truth data;
training the predictive engagement model using a combination of the historical engagement data and the predictive engagement data as training data; and
storing the trained predictive engagement model.

14. The device of any of claims 11 to 13, the processor further configured to execute a method comprising:
generating, based on the predictive engagement data, predictive turnover data, wherein the predictive turnover data predict a rate of resource turnover; and
generating, based on a combination of the predictive reliability data and the predictive contact handling data, predictive shrinkage data, wherein the predictive shrinkage data predict a likelihood of resource shrinkage, and/or wherein the predictive engagement model includes a neural network, and wherein the neural network, once trained, outputs the predictive engagement data associated with the agent based on the historical engagement data associated with the agent.

15. A non-transitory computer readable medium storing computer readable instructions configured to cause one or more processors to perform the method of any one of claims 1 to 9.
